# EUROPÄISCHE PATENTSCHRIFT

(11) **EP 2 805 080 B1**
(45) Veröffentlichungstag und Bekanntmachung des Hinweises auf die Patenterteilung: **31.07.2019**
(21) Anmeldenummer: 13700859.5
(22) Anmeldetag: 14.01.2013
(51) Int. Cl.: F16D 21/06, F16D 25/08, F16D 25/10

(54) **NASSE REIBKUPPLUNG MIT INTEGRIERTEM DÄMPFERSYSTEM**
WET FRICTION CLUTCH WITH INTEGRATED DAMPING SYSTEM
EMBRAYAGE À FRICTION À BAIN D'HUILE, À SYSTÈME AMORTISSEUR INTÉGRÉ

(30) Priorität: 20.01.2012 DE 102012200832
(43) Veröffentlichungstag der Anmeldung: 26.11.2014
(73) Patentinhaber: Schaeffler Technologies AG & Co. KG, 91074 Herzogenaurach (DE)
(72) Erfinder: ALMERT, Andreas, 77767 Urloffen (DE); FISCHER, Nils, 76776 Neuburg (DE); LORENZ, Elmar, 77836 Rheinmünster Söllingen (DE); NGUYEN, Anh Trong, 77830 Bühlertal (DE); SEIFERMANN, Achim, 76473 Iffezheim (DE); SIMONOV, Anton, 77833 Ottersweier (DE)
(86) Internationale Anmeldenummer: PCT/EP2013/050537
(87) Internationale Veröffentlichungsnummer: WO 2013/107703

(56) Entgegenhaltungen:
- WO-A2-2011/076176
- DE-A1- 10 115 454
- DE-A1-102007 005 461
- DE-A1-102010 015 431
- DE-A1-102010 051 911
- DE-A1-102010 052 384
- US-A1- 2001 022 245

## Beschreibung

Die vorliegende Erfindung betrifft eine nasse Reibkupplung mit integriertem Dämpfersystem. Insbesondere betrifft die Erfindung eine nasse Doppelkupplung. Üblicherweise wird eine nasse Reibkupplung zur Drehmomentübertragung von einer Abtriebswelle einer Antriebseinheit, insbesondere einer Kurbelwelle einer Verbrennungskraftmaschine, auf einen Antriebsstrang, insbesondere über ein Schaltgetriebe verwendet. Das eingesetzte Dämpfersystem dient dabei der Abkopplung von Schwingungen von der Antriebseinheit und dem Schaltgetriebe beziehungsweise dem Antriebsstrang. Insbesondere bei Verbrennungskraftmaschinen entstehen Schwingungen und Drehmomentspitzen, die zu einer Überlastung der angeschlossenen Bauteile führen können und darüber hinaus störende Geräusche entwickeln. Es ist daher erwünscht, die Schwingungen und Drehmomentspitzen möglichst frühzeitig, das heißt nahe bei der Antriebseinheit, aus dem Antriebssystem abzukoppeln. Gleichzeitig ist es aber auch wünschenswert, die Antriebseinheit von Schwingungen aus dem restlichen Antriebssystem abzukoppeln.

Aus dem Stand der Technik sind Dämpfersysteme bekannt, die der Reibkupplung vorgeschaltet sind und meist als zusätzliches Bauteil zwischen der Abtriebswelle und der Reibkupplung angeordnet sind. Zu diesem Zweck hat sich der so genannte Zweimassenschwinger durchgesetzt, der eine sehr gute Dämpfungscharakteristik aufweist. Ein solcher Zweimassenschwinger ist jedoch relativ schwer und träge. Der Zweimassenschwinger stellt daher eine Baueinheit dar, die nicht nur zusätzlichen Bauraum benötigt, sondern auch die Trägheit des Gesamtsystems erhöht und somit die Effizienz des Antriebssystems reduziert.

Aufgrund des allgemein geforderten gesteigerten Fahrkomforts und dem erzielbaren geringeren Verbrauch mit Hilfe eines Doppelkupplungsautomatikgetriebes setzt sich der Einsatz von Doppelkupplungen durch. Insbesondere um den Energieverbrauch moderner Maschinen, insbesondere mobiler Verbrennungskraftmaschinen, zu reduzieren, sollen diese niedertourig, das heißt mit geringen Drehzahlen, betrieben werden. Dies gilt auch für den Einsatz von anderen Reibkupplungen. Dabei treten aber aufgrund der niedrigen Drehfrequenzen vermehrt störende Vibrationen auf. Zugleich werden aber die Kraftfahrzeuge immer leichter gebaut und weisen daher eine sinkende schwingungsdämpfende Masse auf. Daher werden vermehrt Dämpfungssysteme, beziehungsweise Schwingungsausgleichssysteme, notwendig, die in der Regel aber einen vergrößerten Bauraum erfordern. Gerade bei Kraftfahrzeugen der Kleinwagenklasse und Kleinstwagenklasse ist der Bauraum jedoch besonders begrenzt.

Aus der DE 10 2010 052 384 ist eine nasse Doppelkupplung mit einem Dämpfersystem und einem Fliehkraftpendel bekannt.

Als weiterer Stand der Technik wird auf die WO 2011/076176 A2 verwiesen, die ein Zweimassenschwungrad sowie eine Kupplung zeigt, wobei an der Sekundärschwungmasse des Zweimassenschwungrads ein Fliehkraftpendel angeordnet ist.

Der vorliegenden Erfindung liegt davon ausgehend die Aufgabe zugrunde, die aus dem Stand der Technik bekannten Nachteile zumindest teilweise zu überwinden. Insbesondere soll eine Reibkupplung angegeben werden, die auf kleinem Bauraum gute Dämpfungseigenschaften beziehungsweise Schwingungsausgleichseigenschaften aufweisen soll, ohne dabei die rotierende Masse und damit den Energieverbrauch des Gesamtantriebssystems zu vergrößern, gegebenenfalls diese sogar zu verringern.

Diese Aufgaben werden gelöst durch die Merkmale des unabhängigen Anspruchs 1.

Vorteilhafte Weiterbildungen sind Gegenstand der abhängigen Patentansprüche.

Die vorliegende Erfindung befasst sich mit einer nassen Reibkupplung, die zumindest die folgenden Komponenten aufweist:
- eingangsseitig mindestens eine Eingangswelle;
- ausgangsseitig mindestens eine Ausgangswelle;
- mindestens ein Reibsystem zum lösbaren Verbinden der mindestens einen Eingangswelle mit der mindestens einen Ausgangswelle zum Übertragen eines Drehmoments; und
- mindestens ein mitrotierendes Kupplungsgehäuse zum Positionieren des Reibsystems und zeichnet sich dadurch aus, dass das Kupplungsgehäuse eingangsseitig eine Mitnehmerscheibe und ausgangsseitig einen Kupplungstopf aufweist, wobei diese durch einen Dämpfer schwingungsentkoppelt verbunden sind, und der Kupplungstopf mit mindestens einem Fliehkraftpendel versehen ist.

Aufgabe einer Reibkupplung ist es, das Drehmoment einer Antriebswelle auf eine weitere Welle, insbesondere ein Schaltgetriebe zu übertragen. Bei dynamischen Kupplungen hat sich der Einsatz von reibschlüssiger Kraftübertragung durchgesetzt. Diese Aufgabe wird durch die zentrale Baueinheit, das Reibsystem gelöst. Das Reibsystem setzt sich aus einem oder mehr Reibpaketen zusammen. Ein Reibpaket wiederum weist mindestens einen Reibpartner, bestehend aus einer Anpressplatte und einer korrespondierende Kupplungsscheibe auf. Im Folgenden wird, sofern das Prinzip erklärt wird, stets von einer Anpressplatte und einer Kupplungsscheibe gesprochen, obgleich derzeit der Einsatz einer Mehrzahl von Reibpartnern üblich ist. Zur Übertragung eines Drehmoments, zum Beispiel von der Eingangsseite auf die Ausgangsseite, wird die Anpressplatte gegen die Kupplungsscheibe mit einer Anpresskraft gedrückt. Infolge der Reibung zwischen der Anpressplatte und der Kupplungsscheibe wird die Drehzahl der beiden Bauteile miteinander synchronisiert und das Drehmoment nahezu schlupffrei übertragen. Die Antriebswelle, beispielsweise die einer Verbrennungskraftmaschine, wird mit der eingangsseitigen Eingangswelle verbunden oder bildet diese integral. Das Getriebe wird ausgangsseitig mit der mindestens einen Ausgangswelle verbunden, beziehungsweise die Ausgangswelle bildet integral eine Getriebewelle. Zur besseren Übersicht wird im Folgenden die Seite der Abtriebswelle als eingangsseitig bezeichnet, weil hier ein Drehmoment einer Antriebseinheit auf einen Antriebsstrang übertragen werden soll. Entsprechend wird die Seite zum Antriebsstrang als ausgangsseitig bezeichnet. Dies schließt aber nicht aus, dass auch Drehmomente von dem Antriebsstrang über die Ausgangswelle auf die Eingangswelle übertragen werden, zum Beispiel beim Schleppbetrieb eines Kraftfahrzeugs.

Die nasse Reibkupplung weist ein mitrotierendes Kupplungsgehäuse auf, in welchem das Reibsystem positioniert ist. Das heißt, die Anpressplatte(n) des Reibsystems sind rotatorisch zum mitrotierenden Kupplungsgehäuse fixiert. Damit die Anpressplatte(n) aber für das Verpressen der Anpressplatte mit den Kupplungsscheiben axial beweglich sind, sind die Anpressplatten im Kupplungsgehäuse axial frei beweglich. Das Kupplungsgehäuse weist nun eingangsseitig eine Mitnehmerscheibe auf, über die die Rotation der Eingangswelle sowie das Drehmoment auf das Kupplungsgehäuse übertragen werden. Ausgangsseitig ist ein Kupplungstopf vorgesehen, in welchem das Reibsystem positioniert ist. Die Mitnehmerscheibe und der Kupplungstopf sind dabei nicht rotatorisch fest miteinander fixiert, sondern durch einen Dämpfer voneinander schwingungsentkoppelt Dadurch können Vibrationen der Mitnehmerscheibe nur gedämpft auf den Kupplungstopf übertragen werden. Gleiches gilt umgekehrt für Schwingungen des Kupplungstopfs. Weiterhin ist der Kupplungstopf mit einem Fliehkraftpendel versehen. Durch kleine Massen, die beweglich an dem mitrotierenden Bauteil angeordnet sind, wird die Resonanzfrequenz des Kupplungstopfs dynamisch so verändert, dass sie für einen Großteil der anliegenden Schwingungen ungleich ist. Diese Anordnung des Dämpfers zwischen der Mitnehmerscheibe und dem Kupplungsgehäuse sowie die Verwendung eines Fliehkraftpendels am Kupplungstopf erlauben es, auf die Verwendung eines üblichen Dämpfers, wie zum Beispiel eines Zweimassenschwingers, zu verzichten. Hierdurch wird zum einen der Bauraum kleiner und zum anderen wird ein zusätzlicher Montageschritt, nämlich der Einbau eines Bauteils im Antriebssystem, vermieden. Daraus erfolgen eine geringere träge Masse des Antriebssystems und eine einfachere Montage.

In einer vorteilhaften Ausführungsform der nassen Reibkupplung bilden die Mitnehmerscheibe und der Kupplungstopf eine Verbindung zu einer Energiespeichereinrichtung, wie einer oder mehrerer vorzugsweise geraden oder auf gebogener (Druck-)Feder(n), die die Mitnehmerscheibe und den Kupplungstopf voneinander schwingungsentkoppelt verbindet, so dass ein Torsionsdämpfer bzw. Drehschwingungsdämpfer gebildet wird.

Damit ist insbesondere gemeint, dass der Dämpfer durch Federn gebildet wird, die insbesondere ohne zusätzliche Bauteile an die Mitnehmerscheibe eingangsseitig und an den Kupplungstopf ausgangsseitig angebunden ist. Es werden somit keine zusätzlichen durch Fügeverfahren anzubindenden Bauteile verwendet; lediglich die Verwendung einer zusätzlichen Masse an der Mitnehmerscheibe oder der Kupplungstopf aus einem Material mit höherer Dichte kann unter Umständen notwendig sein. Durch diesen integralen Aufbau wird die träge Masse gering gehalten und die Schwingungseigenschaften der nassen Reibkupplung sind unabhängig von einem zusätzlichen Fügeverfahren (zum Beispiel Schweißen oder Löten), wodurch die Masse verändert wird und es entstehen keine Fugen, in denen Relativbewegungen infolge der Schwingung stattfinden können. Hierdurch wird die Reibkupplung besser zuverlässig auslegbar für eine effektive Schwingungsentkopplung. Ein weiterer Vorteil entsteht durch die Lage des Dämpfers, welcher im Flüssigkeitsbad angeordnet ist. Durch die Flüssigkeit ist der Verschleiß im Dämpfer aufgrund verminderter Stahl-auf-Stahl-Reibung reduziert

Gemäß der erfindungsgemäßen nassen Reibkupplung wird das mindestens eine Fliehkraftpendel von einer Anpressplatte gehalten, die zum Reibsystem gehört und mit dem Kupplungstopf rotatorisch fixiert ist.

Durch die integrale Nutzung einer Anpressplatte eines Reibsystems werden auch hiermit die Vorteile wie in Bezug auf eine integrale Verbindung des Energiespeichers, wie Feder erreicht. Die Montage ist erleichtert, die Anzahl loser Teile wird reduziert sowie ein Fügeschritt mit weiteren möglichen Fertigungsungenauigkeiten vermieden. Hierbei können die Fliehkraftpendel auf verschiedene Anpressplatten verteilt sein oder auch nur eines der Fliehkraftpendel mit einer Anpressplatte gehalten werden. Ebenso kann ein Fliehkraftpendel zwischen einer Mehrzahl von Anpressplatten gehalten werden. Besonders bevorzugt wird ein einziges Fliehkraftpendel bestehend aus mehreren Fliehkraftmassen an einer einzigen Anpressplatte montiert, wobei die Anpressplatte insbesondere aus zwei oder mehr Scheiben aufgebaut ist. Wenn hier ein Fliehkraftpendel genannt wird, so wird darunter eine Baueinheit verstanden, die aus einer Mehrzahl von Massen, vorzugsweise eine gerade Anzahl von Massen, beispielsweise vier, besteht, die an einem Bauteil beweglich fixiert sind. Diese Massen können sich dabei hin und her schwingend in radialer Richtung und in Drehrichtung bewegen. Die exakte Auswahl der Massen, der Anzahl der Massen und die mögliche Bewegungsbahn werden in Abhängigkeit von der Art der Reibkupplung und dem Einsatzzweck ausgelegt. Auch bei dieser Ausführungsform tritt der Vorteil auf, dass das Fliehkraftpendel wie der Dämpfer im Nassraum angeordnet ist. Auch hierdurch treten im Zusammenspiel mit der Flüssigkeit nutzbare Dämpfungseigenschaften auf. Um ein breites Schwingungsspektrum abzudecken, ist es mitunter erforderlich eine Mehrzahl von Fliehkraftpendeln vorzusehen, die gegebenenfalls unterschiedliche Charakteristiken aufweisen.

Gemäß der erfindungsgemäßen nassen Reibkupplung ist die Reibkupplung eine Doppelkupplung mit zwei Ausgangswellen.

Bei einer solchen Anordnung besteht das Reibsystem aus zwei Reibpaketen, die jeweils aus mindestens einer Anpressplatte und mindestens einer Kupplungsscheibe aufgebaut sind. Die mindestens eine Kupplungsscheibe des jeweiligen Reibpakets ist mit jeweils einer der beiden Ausgangswellen verbunden. Eine solche Doppelkupplung ist in der Regel an ein Doppelwelliges Schaltgetriebe angeschlossen, so dass das zuvor verwendete Übersetzungsverhältnis (mittels des ersten Reibpakets) noch geschaltet bleibt, während das danach verwendete Übersetzungsverhältnis (mittels des zweiten Reibpakets) bereits geschaltet ist. Der Vorteil einer Doppelkupplung gegenüber einer einfachen Kupplung liegt also darin, dass beim Lösen der Drehmomentübertragung mit zum Beispiel dem ersten Getriebestrang bereits das zweite Reibpaket für zum Beispiel den zweiten Getriebestrang beginnt einzugreifen. Dadurch wird es möglich, die Drehmomentabgabe der Abtriebswelle, zum Beispiel der Kurbelwelle einer Verbrennungskraftmaschine, nahezu konstant zu halten.

Gemäß der erfindungsgemäßen nassen Reibkupplung weist die Doppelkupplung einen Zentralsteg mit einem Anschluss für das Fliehkraftpendel auf, und der Anschluss aus dem Kupplungstopf ragt radial nach außen.

Für eine möglichst effektive parallele Schaltung wird in der Doppelkupplung ein Zentralsteg vorgesehen, zu dessen beiden Seiten die zwei Reibpakete vorgesehen sind. Somit bildet der Zentralsteg eine Anpressplatte für beide Reibpakete. In dem Zustand, in dem zum Beispiel das erste Reibpaket im Eingriff ist, wird die erste oder die ersten Kupplungsscheibe(n) zwischen der ersten oder den ersten Anpressplatte(n) und der ersten Funktionsfläche des Zentralstegs reibschlüssig gehalten. Soll das zweite Kupplungssystem zum reibschlüssigen Eingriff gebracht werden, so werden die zweite oder die zweiten Anpressplatte(n) und die zweite oder die zweiten Kupplungsscheibe(n) gegen die andere (zweite) Funktionsfläche des Zentralstegs gepresst. Somit bildet der Zentralsteg eine Anpressplatte für beide Reibpakete. Gleichzeitig hat aber der Zentralsteg auch die Aufgabe einer Schwungscheibe, die somit einen sanften Übergang des Drehmoments auf das zweite Kupplungssystem ermöglicht. Um die Eigenschaft der Schwungscheibe zu steigern, ragt der Zentralsteg radial nach außen, so dass das Massenträgheitsmoment erhöht wird. An diesem Teil, der aus dem Kupplungstopf hinausragt, kann vorteilhafter Weise das Fliehkraftpendel angebracht werden. Hierdurch wird die Eigenschaft der Schwungscheibe in Bezug auf die durch das Fliehkraftpendel ausgesteuerte Resonanzfrequenz verbessert. Zugleich wird aber auch die Gesamtmasse beziehungsweise das Massenträgheitsmoment der Doppelkupplung gering gehalten, wodurch der Wirkungsgrad einer solchen Doppelkupplung groß ist. Auch treten hier die Vorteile einer integralen Bauweise auf, wie sie oben im Bezug auf die entfallenden Fügeschritte genannt wurden.

In einer weiteren vorteilhaften Ausführungsform der nassen Reibkupplung wird das Reibsystem durch einen Betätigungsfinger zur Drehmomentübertragung verpresst und der Betätigungsfinger ragt von außen durch die Mitnehmerscheibe hindurch.

In der Regel werden die Anpressplatten und die Kupplungsscheiben eines Reibsystems mit Hilfe einer Betätigungseinrichtung miteinander reibschlüssig verpresst. Häufig werden hierzu aufwendige Hebelmechanismen eingesetzt, um mögliche Lagerkräfte in der Betätigungseinrichtung gering zu halten. Für einen schlanken Aufbau der beschriebenen Reibkupplung ist es vorteilhaft, einen Betätigungsfinger vorzusehen, welcher beispielsweise hydraulisch betätigt wird. Dieser Betätigungsfinger kann somit eine hohe Kraft aufwenden und bedarf keiner aufwendigen Hebelsysteme. Hierbei ist es vorteilhaft, den Betätigungsfinger von außen durch die Mitnehmerscheibe hindurchragen zu lassen. Das bedeutet, der Betätigungsfinger ragt von außerhalb des mitrotierenden Kupplungsgehäuses in den Raum des Reibsystems. Insbesondere bei nassen Kupplungen soll der Raum des Reibsystems klein gehalten werden, weil hierin die Flüssigkeit der Scherung durch die Relativgeschwindigkeiten zwischen Anpressplatten und Kupplungsscheibe ausgesetzt sind. Durch das Verlagern des Betätigungsfingers nach außen kann somit das mitrotierende Kupplungsgehäuse besonders klein gestaltet werden. Hierdurch werden der Bauraum sowie das Massenträgheitsmoment der nassen Reibkupplung reduziert.

In einer weiteren vorteilhaften Ausführungsform der nassen Reibkupplung wird der Betätigungsfinger durch eine Rückstellfeder beim Lösen des Reibsystems zurückbewegt und die Rückstellfeder ist am Kupplungstopf rotatorisch fixiert.

Eine Reibkupplung wird entweder aktiv geschaltet oder aktiv gelöst Zur Gegenbewegung kann eine Rückstellfeder eingesetzt werden. Hierdurch werden die Steuerung und der mechanische Aufbau besonders einfach. Vorteilhaft ist hierbei die Rückstellfeder am Kupplungstopf rotatorisch zu fixieren. Die Rückstellfeder ist durch ihre Federkraft in ständigem Reibkontakt mit dem Betätigungsfinger. Hierdurch wird erreicht, dass die Betätigungseinrichtung beziehungsweise ausschließlich der Betätigungsfinger, wenn eine Lagerung vorgesehen ist, auch im gelösten Zustand sich mit dem Kupplungstopf mitdreht. Somit findet kaum eine oder keine Relativbewegung zwischen dem Betätigungsfinger und der Rückstellfeder statt. Weiterhin vorteilhaft ist es, die Rückstellfeder am Kupplungstopf so zu fixieren, wie auch die Anpressplatten fixiert sind. Hierdurch muss keine zusätzliche Haltevorrichtung vorgesehen werden und durch diesen integralen Aufbau wird wiederum Bauraum und Gewicht eingespart.

In einer weiteren vorteilhaften Ausführungsform der nassen Reibkupplung ist der Kupplungstopf ausgangsseitig offen.

Durch diese Anordnung wird zum einen die Masse des Kupplungstopfs reduziert und zum anderen wird eine Öffnung geschaffen, die den Zugang für eine Betätigungseinrichtung ermöglicht. Hierdurch kann eine Betätigungseinrichtung mit Hebeln verwendet werden, die daher nur geringe Lagerkräfte aufnehmen muss und, abgesehen von den Hebeln, daher insgesamt kleiner gestaltet werden kann. Hierdurch wird abermals Bauraum reduziert und der Kostenaufwand für eine entsprechende Lagerung reduziert. Somit wird das Massenträgheitsmoment reduziert und der Wirkungsgrad der Reibkupplung gesteigert. Ein solcher Kupplungstopf eignet sich insbesondere für den so genannten zentralen Rücker, welcher sehr kompakt und klein und daher insbesondere für Reibkupplungen, ganz besonders Doppelkupplungen, für Kleinfahrzeuge geeignet ist.

Gemäß der erfindunsgemäßen nassen Reibkupplung wird die Anpresskraft zum Verpressen des Reibsystems über den Zentralsteg aufgenommen.

Damit ist insbesondere gemeint, dass keine weitere Vorrichtung vorgesehen ist, die ein Gegenlager für die Anpresskraft durch die Betätigungseinrichtungen auf die Anpressplatten aufnimmt. In dieser Ausführungsform nimmt der Zentralsteg allein die Kräfte auf und wird außen durch den Kupplungstopf rotatorisch fixiert und gegebenenfalls auch axial fixiert. Auf der Innenseite hin zur Ausgangswelle wird die Kraft aus dem Zentralsteg in Anbauteile übertragen. Bei einer bevorzugten Ausführungsform als nasse Doppelkupplung wird der Zentralsteg durch Axiallager gegen die Kupplungsscheiben abgestützt, welche wiederum durch Axiallager gegen feste Anbauteile beziehungsweise die Eingangswelle abgestützt sind. Somit bildet der Zentralsteg die einzige Komponente, die der Betätigungskraft durch die Betätigungseinrichtung entgegensteht Insbesondere bei der Verwendung des Zentralstegs ist die Verwendung des Zentralstegs als Kraftaufnehmer besonders vorteilhaft aufgrund der notwendigen Masse und damit Dicke (Flächenträgheit) einer Schwungscheibe.

Im Rahmen der Erfindung ist auch ein Kraftfahrzeug beschrieben, welches eine Antriebseinheit mit Abtriebswelle, einen Antriebsstrang und eine nasse Reibkupplung nach der obigen Beschreibung aufweist, wobei die nasse Reibkupplung die Abtriebswelle mit dem Antriebsstrang lösbar verbindet und die Antriebseinheit in dem Kraftfahrzeug bevorzugt vor der Fahrerkabine und quer zur Längsachse ausgerichtet ist.

Die meisten Kraftfahrzeuge weisen heutzutage einen Frontantrieb auf und ordnen daher bevorzugt die Antriebseinheit, beispielsweise eine Verbrennungskraftmaschine oder einen Elektromotor, vor der Fahrerkabine und quer zur Hauptfahrrichtung an. Der Bauraum ist bei einer solchen Anordnung besonders gering und es ist daher besonders vorteilhaft, eine Reibkupplung nach obiger Beschreibung zu verwenden, weil diese einen besonders geringen Bauraum einnimmt.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene nasse Reibkupplung, beziehungsweise Doppelkupplung, ist aufgrund ihrer besonders kleinen Baugröße besonders geeignet. Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: eine Doppelkupplung mit integriertem Dämpfer im Schnitt,
- Fig. 2:: ein Antriebssystem nach dem Stand der Technik,
- Fig. 3:: ein Antriebssystem mit integriertem Dämpfungssystem,
- Fig. 4:: ein Kraftfahrzeug mit nasser Reibkupplung.

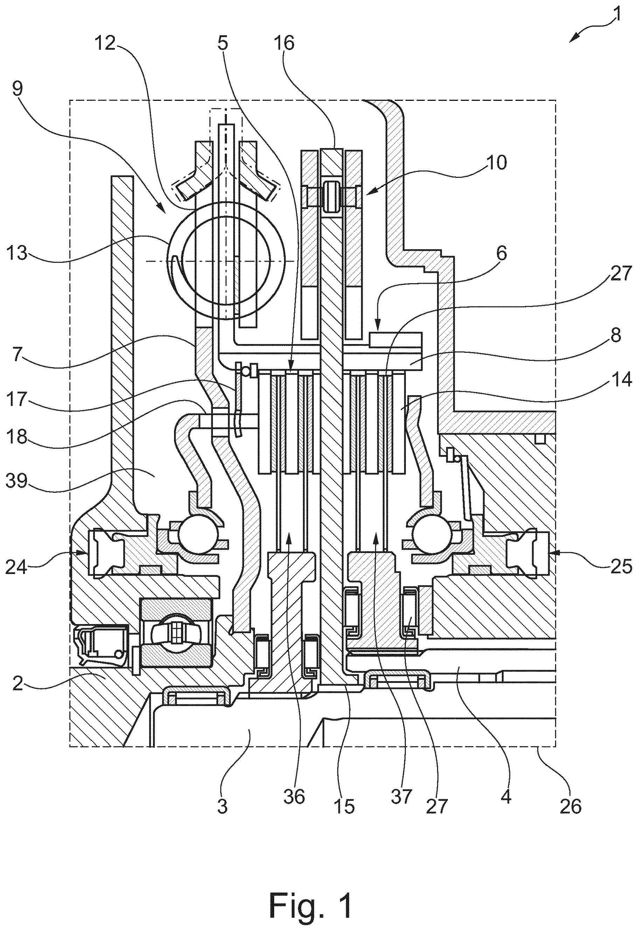

Fig. 1 zeigt eine nasse Reibkupplung 1 in Doppelkupplungsausführung mit einem Nassraum 39. Um die Mittellinie 26 rotiert die Eingangswelle 2, mit der die Mitnehmerscheibe 7 fest verbunden ist und daher stets mitrotiert. Auf der Ausgangsseite sind eine erste Ausgangswelle 3 und eine zweite Ausgangswelle 4 gezeigt, die jeweils mit dem ersten Reibpaket 36 und dem zweiten Reibpaket 37 des Reibsystems 5 verbunden sind. Zwischen den beiden Reibpaketen 36 und 37 des Reibsystems 5 ist ein Zentralsteg 15 vorgesehen, der über das Kupplungsgehäuse 6 hinausragt und einen Anschluss 16 für ein Fliehkraftpendel 10 bildet. Das Kupplungsgehäuse 6 setzt sich aus der Mitnehmerscheibe 7 und dem Kupplungstopf 8 zusammen. Der Kupplungstopf 8 bildet, beispielsweise mit einer Verzahnung, eine rotatorische Fixierung für die Anpressplatten 14 und in diesem Beispiel ebenfalls für die Rückstellfeder 17. Die Anpressplatten 14 sowie die Kupplungsscheiben 27 zwischen den Anpressplatten 14 und dem Zentralsteg 15 sind axial entlang der Mittellinie 26 beweglich. Die Rückstellfeder 17 ist axial fixiert. Die Mitnehmerscheibe 7 bildet eine Verbindung 11 für den Energiespeicher, wie Feder 13 und der Kupplungstopf 8 bildet eine Verbindung 12 mit dem Energiespeicher, wie Feder 13, die somit den Dämpfer 9 bilden.

In diesem Beispiel ist auf der Eingangsseite ein Betätigungsfinger 18 gezeigt, welcher über die Rückstellfeder 17 zurückgestellt wird, so dass das eingangsseitige Reibpaket 36 gelöst wird beziehungsweise die Reibung reduziert oder aufgehoben wird. Mit dem Betätigungsfinger 18 wird das erste Reibpaket 36 betätigt, wodurch die Ausgangswelle 3 ein Drehmoment von der Eingangswelle 2 aufnimmt. Der Betätigungsfinger 18 wird axial und radial gelagert und von einem hydraulischen Rücker 24 betätigt. Das zweite Reibpaket 37 ist mit der zweiten Ausgangswelle 4 verbunden, so dass beim Verpressen des zweiten Reibpakets 37 das Drehmoment von der Eingangswelle 2 auf die Ausgangswelle 4 übertragen wird. Das zweite Reibpaket 37 wird über den ausgangsseitigen Zentralrücker 25 betätigt. Die Anpresskraft des hydraulischen Rückers 24 beziehungsweise des Zentralrückers 25 wird von dem Zentralsteg 15 aufgenommen und über die axiale Lagerung 35 zur Mittellinie 26 hin eingangsseitig auf die Eingangswelle 2 übertragen und ausgangsseitig auf den Umbau des Zentralrückers 25 geleitet.

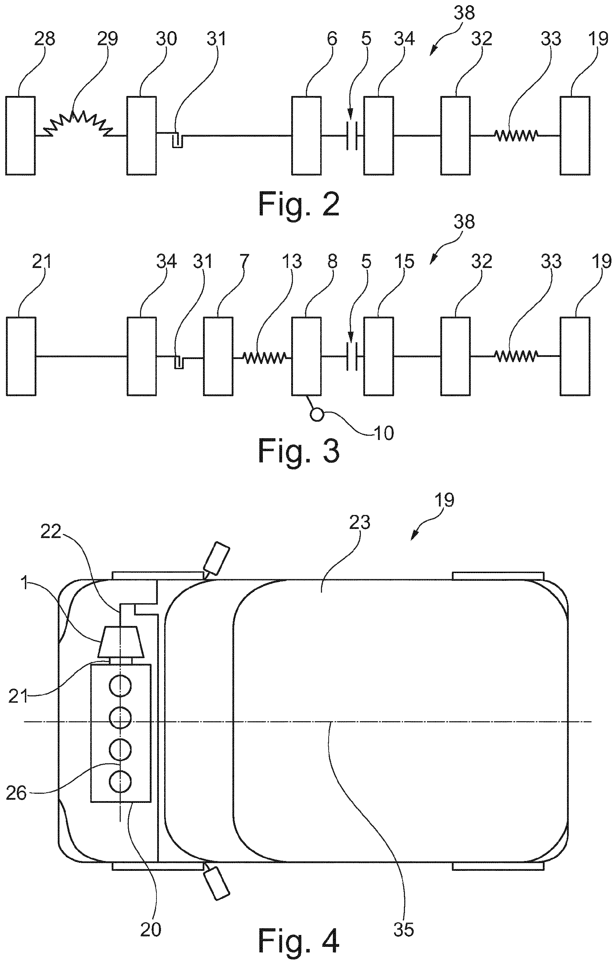

Fig. 2 zeigt ein Antriebssystem 38 gemäß dem Stand der Technik, wobei eingangsseitig (links dargestellt) eine erste Masse 28 vorgesehen ist, die mit einem Energiespeicher, wie Feder 29 mit einer zweiten Masse 30 verbunden ist, die somit einen Drehschwingungsdämpfer bilden. Diese Dämpfereinheit ist über eine Steckverzahnung 31 mit einem Kupplungsgehäuse 6 verbunden, nachfolgend ist ein Reibsystem gezeigt, an das sich ein Schwungrad 34 anschließt. Daran wiederum schließt sich ein Differential 32 und Seitenwellen 33 und das Kraftfahrzeug 19 an.

In der Fig. 3 wird ein Antriebssystems 38 gemäß der obigen Beschreibung gezeigt. Hierbei ist die Abtriebswelle mit einem Schwungrad 34 verbunden, welches über eine Steckverzahnung 31 mit der Mitnehmerscheibe 7 verbunden ist. Die Mitnehmerscheibe 7 ist über einen Energiespeicher, wie Feder 13 mit dem Kupplungstopf 8 verbunden, an dem das Fliehkraftpendel 10 angebracht ist. Daran schließt sich das Reibsystem 5 mit dem Zentralsteg 15 an. Im Weiteren ist das Antriebssystem 38 mit einem konventionellen Differential 32 mit Seitenwellen 33 und dem Kraftfahrzeug 19 verbunden.

In Fig. 4 ist ein Kraftfahrzeug 19 gezeigt, in dem eine Antriebseinheit 20 vor der Fahrerkabine 23 angeordnet ist. Die Abtriebswelle 21 der Antriebseinheit 20 ist über eine nasse Reibkupplung 1, die hier nur rein schematisch dargestellt ist, mit einem auch rein schematisch dargestellten Antriebsstrang 22 verbunden. Die Mittellinie 26 der Antriebseinheit 20 ist quer zur Längsachse 35 des Kraftfahrzeugs 19 ausgerichtet.

Durch die integrale Bauweise der nassen Reibkupplung ist ein Einsatz mit geringem Bauraum und geringem Massenträgheitsmoment möglich, so dass ein großer Wirkungsgrad erreicht werden kann.

### Bezugszeichenliste

- 1: nasse Reibkupplung
- 2: Eingangswelle
- 3: erste Ausgangswelle
- 4: zweite Ausgangswelle
- 5: Reibsystem
- 6: Kupplungsgehäuse
- 7: Mitnehmerscheibe
- 8: Kupplungstopf
- 9: Dämpfer
- 10: Fliehkraftpendel
- 11: erste Verbindung
- 12: zweite Verbindung
- 13: Energiespeicher, wie Feder
- 14: Anpressplatte
- 15: Zentralsteg
- 16: Anschluss
- 17: Betätigungsfinger
- 18: Rückstellfeder
- 19: Kraftfahrzeug
- 20: Antriebseinheit
- 21: Abtriebswelle
- 22: Antriebsstrang
- 23: Fahrerkabine
- 24: hydraulischer Rücker
- 25: Zentralrücker
- 26: Mittellinie
- 27: Axiallager
- 28: erste Masse
- 29: Drehschwingungsdämpfer
- 30: zweite Masse
- 31: Steckverzahnung
- 32: Differential
- 33: Seitenwellen
- 34: Schwungrad
- 35: Längsachse
- 36: erstes Reibpaket
- 37: zweites Reibpaket
- 38: Antriebssystem
- 39: Nassraum

## Patentansprüche

1. Reibkupplung (1), aufweisend zumindest die folgenden Komponenten:
- eingangsseitig mindestens eine Eingangswelle (2);
- ausgangsseitig mindestens eine Ausgangswelle (3,4);
- mindestens ein Reibsystem (5) zum lösbaren Verbinden der mindestens einen Eingangswelle (2) mit der mindestens einen Ausgangswelle (3,4) zum Übertragen eines Drehmoments; und
- mindestens ein mitrotierendes Kupplungsgehäuse (6) zum Positionieren des Reibsystems (5)
, wobei
das Kupplungsgehäuse (6) eingangsseitig eine Mitnehmerscheibe (7) und ausgangsseitig einen Kupplungstopf (8) aufweist, wobei diese durch einen Dämpfer (9) schwingungsentkoppelt verbunden sind, und der Kupplungstopf (8) mit mindestens einem Fliehkraftpendel (10) versehen ist, wobei mindestens ein Fliehkraftpendel (10) von mindestens einer Anpressplatte (14) gehalten wird, die zum Reibsystem (5) gehört und mit dem Kupplungstopf (8) rotatorisch fixiert ist, **dadurch gekennzeichnet,**
**dass** die Reibkupplung als nasse Reibkupplung ausgebildet ist, wobei die Reibkupplung (1) eine Doppelkupplung mit zwei Ausgangswellen (3,4) ist und die Doppelkupplung einen Zentralsteg (15) mit einem Anschluss (16) für das Fliehkraftpendel (10) aufweist, und der Anschluss (16) aus dem Kupplungstopf (8) radial nach außen ragt, und wobei eine Anpresskraft zum Verpressen des Reibsystems (5) über den Zentralsteg (15) aufgenommen wird.

2. Nasse Reibkupplung (1) nach Anspruch 1, wobei die Mitnehmerscheibe (7) und der Kupplungstopf (8) eine Verbindung (11,12) zu einer Feder oder mehrerer Federn (13) bilden, die die Mitnehmerscheibe (7) und den Kupplungstopf (8) voneinander schwingungsentkoppelt verbindet.

3. Nasse Reibkupplung (1) nach einem der vorhergehenden Ansprüche, wobei das Reibsystem (5) durch einen Betätigungsfinger (17) zur Drehmomentübertragung verpresst wird und der Betätigungsfinger (17) von außen durch die Mitnehmerscheibe (7) hindurchragt.

4. Nasse Reibkupplung (1) nach Anspruch 3, wobei der Betätigungsfinger (17) bei einer Betätigung durch eine Rückstellfeder (18) zurückbewegt wird und die Rückstellfeder (18) am Kupplungstopf (8) rotatorisch fixiert ist.

5. Nasse Reibkupplung (1) nach einem der vorhergehenden Ansprüche, wobei der Kupplungstopf (8) ausgangsseitig offen ist.

6. Kraftfahrzeug (19), aufweisend eine Antriebseinheit (20) mit Abtriebswelle (21), einen Antriebsstrang (22) und eine nasse Reibkupplung (1) nach einem der vorhergehenden Ansprüche, wobei die nasse Reibkupplung (1) die Abtriebswelle (21) mit dem Antriebsstrang (22) lösbar verbindet und die Antriebseinheit (20) in dem Kraftfahrzeug (19) bevorzugt vor der Fahrerkabine (23) und quer zur Längsachse (35) ausgerichtet ist

## Claims

1. Friction clutch (1), having at least the following components:
- at least one input shaft (2) on the input side;
- at least one output shaft (3, 4) on the output side;
- at least one friction system (5) for releasably connecting the at least one input shaft (2) to the at least one output shaft (3, 4) in order to transmit a torque; and
- at least one corotating clutch housing (6) for positioning the friction system (5),
the clutch housing (6) having a driver plate (7) on the input side and a clutch pot (8) on the output side, the said driver plate (7) and clutch pot (8) being connected by way of a damper (9) in a manner which is decoupled in terms of vibration, and the clutch part (8) being provided with at least one centrifugal force pendulum (10), at least one centrifugal force pendulum (10) being held by at least one pressure plate (14) which belongs to the friction system (5) and is fixed rotationally to the clutch pot (8), **characterized in that** the friction clutch is configured as a wet friction clutch, the friction clutch (1) being a double clutch with two output shafts (3, 4), and the double clutch having a central web (15) with a connector (16) for the centrifugal force pendulum (10), and the connector (16) protruding radially to the outside from the clutch pot (8), and a pressing force for pressing the friction system (5) being absorbed via the central web (15).

2. Wet friction clutch (1) according to Claim 1, the driver plate (7) and the clutch pot (8) forming a connection (11, 12) to a spring or a plurality of springs (13), which spring connects the driver plate (7) and the clutch pot (8) such that they are decoupled from one another in terms of vibration.

3. Wet friction clutch (1) according to either of the preceding claims, the friction system (5) being pressed by way of an actuating finger (17) for the transmission of torque, and the actuating finger (17) protruding from the outside through the driver plate (7).

4. Wet friction clutch (1) according to Claim 3, the actuating finger (17) being moved back in the case of an actuation by way of a restoring spring (18), and the restoring spring (18) being fixed rotationally on the clutch pot (8).

5. Wet friction clutch (1) according to one of the preceding claims, the clutch pot (8) being open on the output side.

6. Motor vehicle (19), having a drive unit (20) with an output shaft (21), a drive train (22) and a wet friction clutch (1) according to one of the preceding claims, the wet friction clutch (1) connecting the output shaft (21) releasably to the drive train (22), and the drive unit (20) preferably being oriented in the motor vehicle (19) in front of the driver's cab (23) and transversely with respect to the longitudinal axis (35).

## Revendications

1. Embrayage à friction (1), présentant au moins les composants suivants :
- du côté de l'entrée, au moins un arbre d'entrée (2) ;
- du côté de la sortie, au moins un arbre de sortie (3, 4) ;
- au moins un système de friction (5) pour la connexion détachable de l'au moins un arbre d'entrée (2) à l'au moins un arbre de sortie (3, 4) en vue de la transmission d'un couple ; et
- au moins un boîtier d'embrayage entraîné conjointement en rotation (6), pour le positionnement du système de friction (5),
le boîtier d'embrayage (6) présentant, du côté de l'entrée, un disque d'entraînement (7) et du côté de la sortie, une coiffe d'embrayage (8), ceux-ci étant connectés de manière désaccouplée en oscillations par un amortisseur (9), et la coiffe d'embrayage (8) étant pourvue d'au moins un pendule à force centrifuge (10), au moins un pendule à force centrifuge (10) étant retenu par au moins une plaque de pressage (14) qui appartient au système de friction (5) et qui est fixée en rotation à la coiffe d'embrayage (8), **caractérisé en ce que** l'embrayage à friction est réalisé sous forme d'embrayage à friction humide, l'embrayage à friction (1) étant un double embrayage avec deux arbres de sortie (3, 4) et le double embrayage présentant une âme centrale (15) avec un raccord (16) pour le pendule à force centrifuge (10), et le raccord (16) sortant radialement vers l'extérieur hors de la coiffe d'embrayage (8), et une force de pressage pour presser le système de friction (5) étant reçue par le biais de l'âme centrale (15).

2. Embrayage à friction humide (1) selon la revendication 1, dans lequel le disque d'entraînement (7) et la coiffe d'embrayage (8) forment une connexion (11, 12) à un ressort ou à plusieurs ressorts (13), laquelle relie le disque d'entraînement (7) et la coiffe d'embrayage (8) de manière désaccouplée en oscillations l'un de l'autre.

3. Embrayage à friction humide (1) selon l'une quelconque des revendications précédentes, dans lequel le système de friction (5) est pressé par un doigt d'actionnement (17) en vue de la transmission de couple et le doigt d'actionnement (17) pénètre depuis l'extérieur à travers le disque d'entraînement (7).

4. Embrayage à friction humide (1) selon la revendication 3, dans lequel le doigt d'actionnement (17) est ramené en arrière dans le cas d'un actionnement par un ressort de rappel (18) et le ressort de rappel (18) est fixé en rotation à la coiffe d'embrayage (8).

5. Embrayage à friction humide (1) selon l'une quelconque des revendications précédentes, dans lequel la coiffe d'embrayage (8) est ouverte du côté de la sortie.

6. Véhicule automobile (19), présentant une unité d'entraînement (20) avec un arbre de prise de force (21), une chaîne cinématique (22) et un embrayage à friction humide (1) selon l'une quelconque des revendications précédentes, l'embrayage à friction humide (1) reliant de manière détachable l'arbre de prise de force (21) à la chaîne cinématique (22) et l'unité d'entraînement (20) étant orientée dans le véhicule automobile (19) de préférence avant la cabine de conduite (23) et transversalement à l'axe longitudinal (35).
